(19) **Europäisches Patentamt European Patent Office Office européen des brevets**

(11) **EP 1 715 315 B1**

(12) **FASCICULE DE BREVET EUROPEEN**

(45) Date de publication et mention
de la délivrance du brevet:
**23.06.2010 Bulletin 2010/25**

(51) Int Cl.:
*G01J 5/20* (2006.01)       *H01Q 1/38* (2006.01)

(21) Numéro de dépôt: **06300295.0**

(22) Date de dépôt: **28.03.2006**

(54) **Détecteur bolométrique, dispositif de détection d'ondes électromagnétiques submillimétriques et millimétriques mettant en oeuvre un tel détecteur**

Bolometrischer Detektor, Vorricthung zur Detektion elektromagnetischer Submillimeter- und Millimeterwellen mit einem solchen Detektor

Bolometric detector, device for the detection of submillimetric and millimetric electromagnetic waves using said detector

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **18.04.2005 FR 0503836**

(43) Date de publication de la demande:
**25.10.2006 Bulletin 2006/43**

(73) Titulaire: **Commissariat à l'Énergie Atomique et aux Énergies Alternatives 75015 Paris (FR)**

(72) Inventeurs:
• **Peytavit, Emilien 38600 Fontaine (FR)**
• **Ouvrier-Buffet, Jean-Louis 74320 Sevrier (FR)**

(74) Mandataire: **Vuillermoz, Bruno et al Cabinet Laurent & Charras "Le Contemporain" 50, Chemin de la Bruyère 69574 Dardilly Cédex (FR)**

(56) Documents cités:
**FR-A- 2 855 609     US-B1- 6 292 140**

**Description**

DOMAINE TECHNIQUE

La présente invention concerne un détecteur bolométrique, ainsi qu'un dispositif de détection d'ondes électromagnétiques notamment situées dans le domaine des ondes millimétriques et submillimétriques mettant en oeuvre un tel détecteur.

Elle concerne également le procédé de réalisation de ce détecteur.

La détection des ondes millimétriques et plus particulièrement submillimétriques présente un certain nombre d'intérêts, notamment sur le plan scientifique et technologique.

En effet, ce domaine de longueurs d'onde correspond à de nombreuses excitations dans la matière (phonons, rotation des molécules, transition intrabandes, ...). Corollairement, la détection de ces ondes et leur interprétation présentent de nombreuses applications, notamment dans le domaine de l'analyse des polluants de l'atmosphère, en biophysique, en raison de l'absorption de ces ondes par les liquides, mais également en télécommunication, en radioastronomie, radars anti-collision, imagerie biomédicale, etc...

Deux principes physiques différents sont actuellement mis en oeuvre pour réaliser la détection des ondes millimétriques et submillimétriques.

Le premier d'entre eux consiste à détecter les ondes électromagnétiques au moyen d'une antenne de telle sorte à créer un signal électrique, dont le traitement est effectué par un circuit électronique fonctionnant à la fréquence de l'onde. L'inconvénient des détecteurs fonctionnant selon ce premier principe est d'être fortement limité en fréquences.

Au surplus, attendu que de tels détecteurs sont généralement agencés selon une structure matricielle, les circuits correspondants génèrent une dissipation de chaleur relativement élevée, de l'ordre de 1 Watt pour une matrice 32x32, constituant un autre inconvénient.

Le second principe technique connu consiste à mettre en oeuvre une antenne de détection des ondes électromagnétiques, propre à créer un flux calorifique, dont la mesure correspond au signal recherché. Les détecteurs utilisés dans le cadre de ce principe sont traditionnellement constitués par la famille des détecteurs bolométriques.

De manière connue, les détecteurs thermiques, famille à laquelle appartiennent les détecteurs bolométriques, absorbent la puissance d'un rayonnement électromagnétique incident, la convertissent en chaleur, qui se transforme ensuite en un signal résultant de l'élévation de température corrélative par rapport à une température de référence, dans une plage déterminée permettant d'associer à ces variations de températures des signaux électriques correspondant à la mesure effective du flux électromagnétique incident. On conçoit cependant, que dès lors que l'on mesure une variation de température, ledit détecteur doit être le plus isolé possible sur le plan thermique, afin que la mesure ne soit pas polluée par les interférences des constituants auxquels il est relié mécaniquement et électriquement.

Sous l'effet du rayonnement incident, le détecteur s'échauffe et transmet l'élévation de température corrélative au matériau thermique sensible. Cette augmentation de température engendre une variation d'une propriété dudit matériau sensible, telle qu'une apparition de charges électriques par effet pyroélectrique, la variation de la capacité par changement de la constante diélectrique pour les détecteurs capacitifs, la variation de la tension par effet thermoélectrique pour les thermocouples, et la variation de la résistance pour les détecteurs bolométriques.

Dans le domaine de la détection infrarouge, l'usage de détecteurs bolométriques est largement répandu. Ces détecteurs sont classiquement constitués d'une membrane suspendue, qui comporte une couche mince (typiquement entre 0.1 et 1 micromètre) réalisée en matériau bolométrique sensible à la température, deux électrodes dites coplanaires et un absorbeur, dont la fonction est de capter le rayonnement électromagnétique pour le convertir en chaleur au sein de la structure. La membrane est suspendue au-dessus du substrat - support, par l'intermédiaire de points d'ancrage ou pions de fixation, propres à isoler ladite membrane du substrat. Ces structures, également dénommées piliers permettent d'amener les potentiels d'excitation ou stimuli vers les parties conductrices ou électrodes du détecteur bolométrique via des structures planes et allongées, également appelées bras d'isolement. Elles sont donc conductrices électriquement mais en revanche présentent une résistance thermique la plus élevée possible.

Afin d'aboutir à des performances satisfaisantes, le matériau bolométrique, c'est-à-dire le matériau sensible doit présenter une faible masse calorifique, doit être bien isolée thermiquement par rapport au support, et enfin doit présenter une forte sensibilité à l'effet de conversion de l'échauffement en signal électrique.

De manière connue, le substrat - support, généralement réalisé en silicium, reçoit un circuit de lecture constitué d'un circuit électronique intégrant des moyens d'adressage séquentiel ou de multiplexage des détecteurs élémentaires et des moyens d'excitation électrique (stimuli) et de pré-traitement des signaux électriques générés par lesdits détecteurs élémentaires. Ce faisant, un tel circuit de lecture permet de sérialiser les signaux issus des différents détecteurs élémentaires et de les transmettre vers un nombre réduit de sorties, afin d'être exploités par un système d'imagerie usuel, tel que par exemple une caméra infrarouge.

Avantageusement, afin d'optimiser les performances de ces détecteurs, ceux-ci sont encapsulés sous vide ou sous faible pression de gaz inerte conducteur de la chaleur au sein d'un boîtier, muni alors d'une fenêtre transparente à la bande de longueurs d'onde concernée.

Traditionnellement, le matériau bolométrique mis en oeuvre est constitué de silicium polycristallin ou amorphe de type p ou n faiblement ou fortement résistif, mais peut également être réalisé en oxyde de vanadium ($V_2O_5$, $VO_2$) ou d'un cuprate (YBaCuO) élaboré en une phase semi-conductrice.

La mise en oeuvre de tels détecteurs bolométriques a été largement décrite en relation avec la détection dans le domaine de l'infrarouge. Pour cette plage de longueur d'ondes, il est possible de réunir simultanément sur la planche bolométrique les fonctions de thermométrie et d'absorption du rayonnement infrarouge incident.

En effet, un système de détection électromagnétique doit présenter des dimensions voisines de l'ordre de grandeur de la longueur d'onde considérée afin d'être efficace. Il existe un compromis entre la puissance collectée (proportionnelle à la surface du détecteur) et la résolution spatiale. Les phénomènes de diffraction inhérents à tout système optique limitent la résolution spatiale à une valeur de l'ordre de la longueur d'onde dans les dimensions du plan. Les dimensions optimales pour un détecteur sont donc de cet ordre de grandeur.

Ainsi, une planche ou matrice de détecteurs infrarouges de dimensions de 25 x 25 $\mu m^2$ est susceptible d'intégrer ces deux fonctions. Ce faisant, l'absorbeur c'est-à-dire la membrane supportant l'élément sensible bolométrique assure à la fois la fonction de couplage électromagnétique avec le rayonnement incident, et donc d'absorption dudit rayonnement, et la fonction de conversion de ce rayonnement en flux calorifique par effet joule.

Or, dans le domaine des longueurs d'onde submillimétriques voire millimétriques, le raisonnement précédent conduirait à aboutir à des membranes de même ordre de grandeur. Or, tant la masse calorifique, la tenue mécanique que les pertes par rayonnement d'une membrane de telles dimensions sont inenvisageables pour la pérennité des détecteurs mis en oeuvre outre pour la qualité des mesures à réaliser.

Ce faisant, il devient nécessaire de séparer la fonction de couplage électromagnétique, de la fonction de conversion de la puissance électromagnétique en puissance calorifique. La première de ces deux fonctions est réalisée au moyen d'une antenne réceptrice, et la seconde fonction est assurée par une charge résistive associée à l'antenne.

## ETAT ANTERIEUR DE LA TECHNIQUE

On connaît de tels dispositifs de détection bolométrique dits « à antenne », susceptibles de fonctionner à des températures allant de 150 à 300 K, donc à température ambiante. Ces dispositifs mettent en oeuvre des barrettes ou des matrices de tels détecteurs.

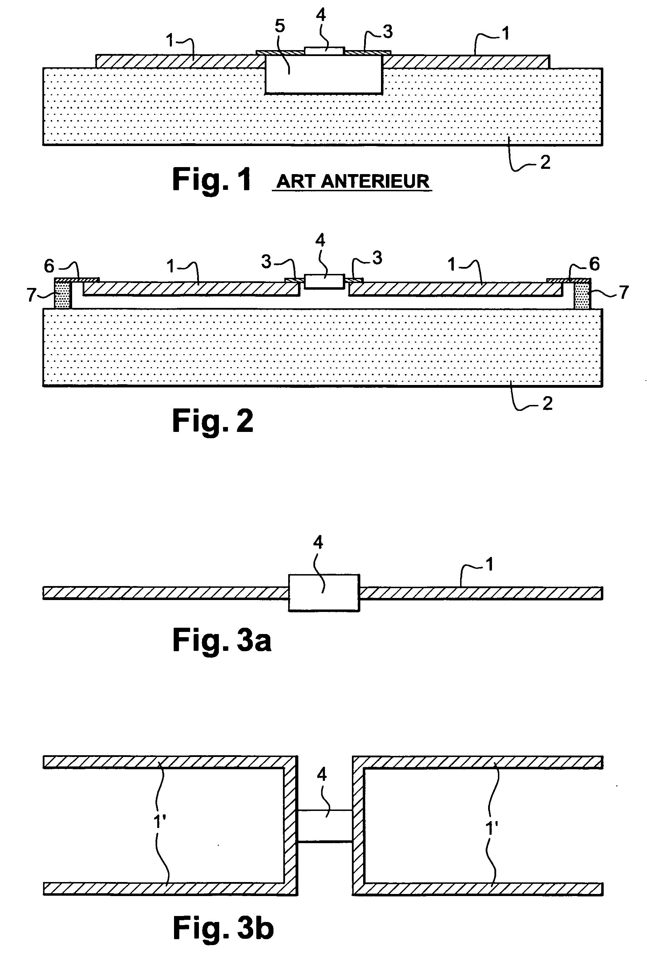

On a représenté en relation avec la figure 1, un schéma illustrant le principe de fonctionnement d'un tel bolomètre à antenne de l'art antérieur.

Celui-ci est fondamentalement constitué d'une antenne (1) constituée d'une couche conductrice, déposée sur un substrat (2) non conducteur. Elle comprend un métal résistif (3) constituant à la fois la charge résistive de l'antenne, propre à générer la puissance calorifique, et des bras d'isolation d'un thermomètre ou bolomètre (4), composé d'un matériau thermo-résistif, tel que par exemple du silicium amorphe ou oxyde de Vanadium. Comme on peut l'observer, il est défini sous le thermomètre (4) une cavité (5) permettant l'isolation thermique de celui-ci.

Les courants électriques générés dans l'antenne (1) par le rayonnement incident sont dissipés dans les bras d'isolation (3) par effet joule.

Avantageusement, un plan métallique réflecteur permet d'optimiser l'absorption pour une gamme de longueurs d'onde donnée. Ce réflecteur est en général positionné à une distance égale à n fois $\lambda/4$ de l'antenne, n étant un nombre entier.

On conçoit bien la nécessité d'isoler thermiquement le détecteur proprement dit, en l'espèce réalisé en matériau bolométrique, afin de permettre l'optimisation de la détection. Or, l'une des difficultés à vaincre avec de tels dispositifs de détection réside dans la limitation imposée par construction, liée à la proportionnalité entre la conductance thermique et la conductance électrique dans tout matériau conducteur, et qui prend une forme simple pour les métaux : la loi de Wiedmann Franz.

Ainsi, le lien électrique entre l'antenne et le thermomètre s'accompagne nécessairement d'un lien thermique, ce qui nuit de manière importante aux performances des bolomètres, puisque aussi bien, ceux-ci mesurent une variation de température par rapport à une valeur de référence.

On a par exemple décrit dans le document WO 00/40937 un dispositif de détection, mettant en oeuvre de tels bolomètres à antenne. L'antenne décrite de type « *Bow-Tie* » (noeud papillon), est placée au-dessus d'un plan métallique à une distance égale au quart de la longueur d'onde d'utilisation du détecteur, définissant ainsi une cavité dite « *quart d'onde* », bien connue en soit. En outre, la charge résistive est constituée par la résistance de charge de l'antenne. Le thermomètre est constitué d'une diode à jonction en silicium monocristallin, dont l'isolation thermique résulte du gravage en face arrière du substrat réalisé en silicium.

L'antenne de forme particulière est déposée sur une couche d'oxyde de silicium SiO, qui du fait de la technologie employée (de type couche mince) présente une épaisseur <u>e</u> de l'ordre du $\mu$m. Une antenne de type « *Bow-Tie* », optimisée pour détecteur autour d'une fréquence de 1 THz présente une surface <u>S</u> de l'ordre de 300 x 300 $\mu m^2$, soit environ le carré de la longueur d'onde d'utilisation.

Si l'on néglige les effets de bords, la résistance thermique entre l'antenne et le substrat peut être déterminée par la relation suivante :

$$Rth = \frac{1}{g}\frac{e}{S}$$

où g représente la conductance thermique du matériau constitutif de l'antenne.

La conductance thermique du substrat réalisé en oxyde de silicium SiO est de l'ordre de g = 1,35 W.m$^{-1}$K$^{-1}$, la résistance thermique entre l'antenne et le substrat est voisine de 10 K/W. L'antenne est donc, dans cette hypothèse, quasiment à la masse thermique ; en d'autres termes, elle n'est pas isolée thermiquement, et en raison de sa connexion mécanique et électrique avec le thermomètre, ce dernier n'est pas isolé thermiquement de façon satisfaisante.

Afin de surmonter cet inconvénient, on a proposé dans le document US 6,329,655, un dispositif de détection mettant également en oeuvre un détecteur bolométrique. L'antenne est du même type que celle du document précédent (bow tie), mais on introduit en outre un couplage capacitif ou inductif entre l'antenne et la résistance de charge. Le couplage s'effectue au centre de l'antenne. Le thermomètre ou bolomètre utilisé est de type thermistor avec préférentiellement de l'oxyde de Vanadium V$_2$O$_5$. Ce couplage nécessite cependant un espace sub-micronique entre l'antenne et le thermomètre, ce qui complique notablement la technologie de réalisation d'un tel détecteur.

Là encore, l'antenne n'est pas isolée thermiquement, seul le matériau thermo-résistif constitutif du thermomètre, est effectivement isolé thermiquement du substrat, mais donc pas de l'antenne.

Enfin, on a suggéré dans le document FR 2 855 609, de positionner un plan réflecteur placé sous le bolomètre, à une distance strictement inférieure au quart de la longueur d'onde d'utilisation. La résistance de charge de l'antenne est alors de l'ordre du kΩ, ce qui correspond à une résistance thermique encore insuffisante, limitant de fait les performances du détecteur. Au surplus, une valeur de résistance de charge aussi élevée s'accompagne nécessairement d'une diminution de la largeur de la bande d'absorption, ce qui s'avère pénalisant pour un détecteur passif, la puissance absorbée étant proportionnelle à la largeur de bande.

En résumé, il n'existe donc pas de solution technique satisfaisante pour permettre d'aboutir de manière relativement simple sur le plan technologique, à une isolation thermique complète ou quasi-complète du thermomètre ou bolomètre.

## EXPOSE DE L'INVENTION

L'invention propose une solution à ces différents problèmes techniques, bien évidemment dans le domaine de la détection des ondes électromagnétiques millimétriques et submillimétriques.

Fondamentalement, le principe général sous-tendant la présente invention repose sur l'isolation thermique de l'antenne par rapport au substrat. Le problème de l'isolation thermique entre le thermomètre et l'antenne ne se pose alors plus, et l'isolation thermique de l'ensemble devenant indépendante de considérations électromagnétiques.

Ainsi, l'invention vise tout d'abord un détecteur bolométrique d'un rayonnement électromagnétique, notamment de fréquences comprises entre 100 GHz et 10 THz, selon la revendication 1.

Selon l'invention, l'antenne réceptrice est elle-même isolée du substrat - support, cette dernière n'étant reliée que très indirectement audit substrat et notamment pas au niveau de ses faces principales.

En effet, ce faisant on aboutit à une optimisation de l'isolation thermique de l'ensemble constitué par l'antenne, l'élément thermométrique et les charges résistives, puisque aussi bien, le seul contact subsistant n'intervient plus qu'au niveau, notamment des bords libres de l'antenne, c'est-à-dire opposés à l'élément thermométrique.

L'ensemble ainsi défini est maintenu suspendu au dessus du substrat avantageusement par le biais de bras d'isolation, conducteurs électriquement mais thermiquement isolants, reposant eux-mêmes sur des points d'ancrage ménagés sur ledit substrat, et solidarisés au niveau des bords libres de l'antenne.

Les antennes mis en oeuvre peuvent être du type dipôle, c'est à dire s'étendre de part et d'autre de l'élément thermométrique, ou de type double dipôles, c'est-à-dire muni de deux sorties au niveau de chacune de leurs zones de connexion à l'élément thermométrique.

## BREVE DESCRIPTION DES FIGURES

La manière de réaliser l'invention et les avantages qui en découlent ressortiront mieux des exemples de réalisation qui suivent, donnés à titre indicatif et non limitatif à l'appui des figures annexées.

La figure 1 est une représentation schématique d'un détecteur bolométrique à antenne conforme à l'état antérieur de la technique.
La figure 2 est une représentation schématique d'un détecteur bolométrique à antenne selon l'invention.
La figure 3 illustre en vue de dessus un détecteur conforme à l'invention, respectivement muni sur la figure 3a d'une antenne dipôle, et sur la figure 3b d'une antenne double dipôles.
La figure 4 est une représentation schématique d'un détecteur bolométrique à antenne suspendue sur une cavité quart d'ondes, dont la figure 5 est une vue du dessus.
Les figures 6a à 6e illustrent un mode de réalisation dudit détecteur bolométrique conforme à l'invention.

**DESCRIPTION DETAILLEE DE L'INVENTION**

Les références numériques désignant les mêmes éléments ont été conservées sur les différentes figures.

Comme on peut l'observer sur la figure 2, le détecteur élémentaire de l'invention présente un ensemble constitué de l'antenne réceptrice (1), du bolomètre (4) et d'une résistance de charge (3), suspendu au dessus du substrat (2), au moyen de bras d'isolation (6), reposant sur des piliers (7) ménagés à cet effet sur ledit substrat.

Ces bras d'isolation (6) sont isolants thermiquement, de sorte que l'ensemble ainsi défini est lui-même isolé thermiquement du substrat, ce qui constitue l'un des buts essentiels de l'invention.

En outre, ces bras (6) sont conducteurs électriquement, de telle sorte à permettre l'acheminement des stimuli au niveau du bolomètre (4), et la collecte des signaux électriques générés par ce dernier, en suite de l'irradiation du détecteur par un rayonnement électromagnétique dans la gamme de longueurs d'onde déterminée.

Le détecteur décrit en relation avec les figures 2 et 3a est muni d'une antenne de type dipôle. Cependant, et telle qu'illustrée en relation avec la figure 3, l'antenne peut être de type double dipôle (1'). Ce faisant, on dispose d'une faible surface conductrice de l'électricité, permettant de minimiser la capacité thermique et les pertes par rayonnement de l'ensemble.

Toutefois, les pertes par rayonnement seront dans tous les cas faibles, car les couches conductrices utilisées pour l'antenne ont des émissivités quasiment nulles dans l'infrarouge (et d'ailleurs dans quasiment tout le spectre à partir du domaine visible jusque dans le domaine millimétrique) en raison des caractéristiques intrinsèques des matériaux utilisés.

On montre en effet, qu'avec ce type d'antenne double dipôles, par exemple constituée d'un ruban de 1 $\mu$m de large, et présentant une longueur totale de 280 $\mu$m et une largeur de 140 $\mu$m, réalisée en un matériau bon conducteur, tel qu'en métal (Aluminium, Or, etc.), on obtient une résistance thermique voisine de 50 MK/W pour une résistance de charge de 150 $\Omega$, à comparer avec la valeur de 2,5 MK/W que l'on aurait obtenu avec les détecteurs de l'art antérieur. En d'autres termes, l'isolation thermique de l'ensemble suspendu est multipliée d'un facteur 20, contribuant ainsi à aboutir au résultat recherché par la présente invention.

Au surplus, la bande d'absorption obtenue à -3dB avec un tel détecteur, muni en outre d'un réflecteur métallique (non représenté) positionné à 75 $\mu$m sous le bolomètre est d'environ 1 THz.

Bien évidemment, une bande centrée sur 650 GHz ou 850 GHz peut également être obtenue à l'aide de filtres appropriés, tels que des réseaux de fentes positionnés devant le détecteur.

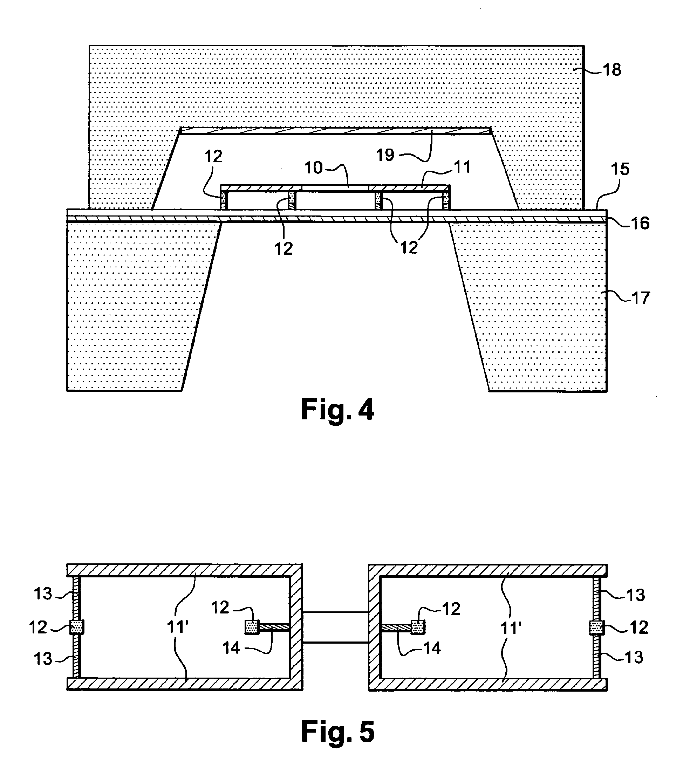

On a représenté en relation avec les figures 4 et 5, une autre forme de réalisation du détecteur conforme à l'invention. Celui-ci comprend un thermomètre (10), d'une antenne dipôle ou double dipôles (11, 11'), l'ensemble étant suspendu par des points d'ancrage (12), ménagés d'une part, au voisinage des bords libres de l'antenne, et d'autre part, au voisinage immédiat du thermomètre. L'ensemble est là encore isolé thermiquement du substrat (2) par des bras d'isolation (13). Ceux-ci sont composés soit d'une seule couche diélectrique (13) réalisée en oxyde de silicium SiO ou en nitrure de silicium SiN, soit d'une couche diélectrique surmontée d'une couche résistive, par exemple réalisée en nitrure de titane TiN (14), afin d'assurer l'acheminement des stimuli au niveau du thermomètre.

Le substrat est un substrat SOI, composé d'une couche de silicium (15) d'épaisseur comprise entre 1 et 20 $\mu$m, d'une couche d'oxyde (par exemple SiO) enterré (16) d'épaisseur comprise entre 3000 Angstrôms et 2 $\mu$m, et d'un substrat massif (17), qui possède généralement 400 à 500 $\mu$m d'épaisseur.

L'ensemble est intégré dans un substrat (18), gravé sur une épaisseur égale à $\lambda$/4 où $\lambda$ est la longueur d'onde d'utilisation du détecteur, et dont le fond de la gravure est avantageusement recouvert d'une couche conductrice (19), propre à faire fonction de réflecteur.

Cette configuration permet l'encapsulation du détecteur et impose alors un éclairage par la face arrière.

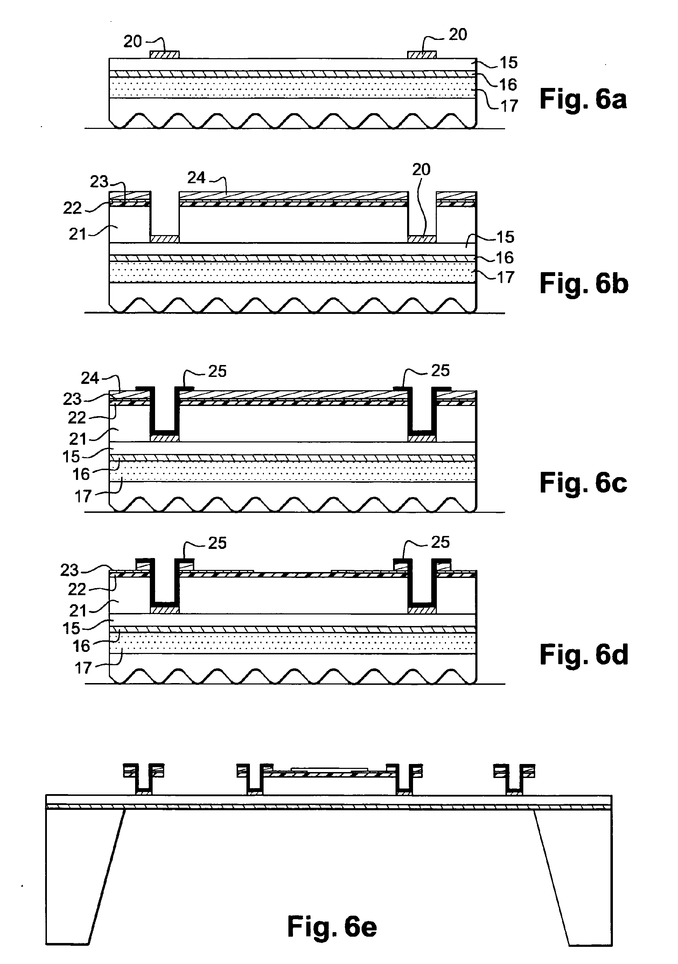

Il va être maintenant décrit plus en détail un mode de réalisation du détecteur bolométrique conforme à l'invention, en relation avec les figures 6a à 6e.

Il convient au préalable de rappeler, qu'un certain nombre de techniques classiques en microélectronique sont mises en oeuvre. Ainsi, la réalisation des couches minces de différents éléments (0.005$\mu$m à 1$\mu$m), en matériau isolant (SiN, SiO, ZnS etc.) et semiconducteur amorphe ou polycristallin (Si, Ge, SiC, a-Si:H, a-SiC:H, a-SiGe:H, etc.), est obtenue à l'aide des techniques de dépôt basse température, habituellement utilisées pour ces matériaux : pulvérisation cathodique, décomposition thermique (LPCVD) ou assistée par plasma (PECVD).

Le dopage éventuel de ces couches est réalisé en introduisant un gaz dopant (BF3, PH3, etc.) dans le réacteur ou bien par implantation ionique. La gravure de ces matériaux est généralement réalisée par des procédés d'attaque chimique assistée par plasma.

Les matériaux métalliques (Ti, TiN, Pt, Al, Pd, Ni, NiCr, etc.) constituant les éléments résistifs, les électrodes et les diverses métallisations comme les lignes d'interconnexion, les antennes ou la résistance de charge d'antenne, sont également déposées par pulvérisation cathodique, ou par décomposition thermique (LPCVD) ou plasma (PECVD). Ces métallisations sont définies par des procédés de gravure chimique, plasma ou par un procédé limitativement connu sous l'expression anglo-saxonne de "lift off". L'épaisseur de ces couches est comprise entre 0.005 $\mu$m et 1 $\mu$m.

Lors d'une première étape (figure 6a), on réalise par dépôt, photolithographie et gravure les lignes conductrices et les plots de connexion en métal (20), par exemple en aluminium, sur lesquels les piliers de maintien seront fabriqués. Ces dépôts sont réalisés sur un empilement constitué du silicium (15), de la couche enterrée d'oxyde de silicium (116), et du substrat massif (17).

Après passivation au moyen d'un dépôt de SiO (non représenté), une couche sacrificielle (21) de 1 à 10 $\mu$m d'épaisseur, et par exemple réalisée en polyimide est déposée, puis une membrane isolante électriquement (22), réalisée en SiO ou en SiN par exemple, et dont la fonction est de servir de support mécanique.

Une ou plusieurs couches métalliques (23, 24), dont l'une au moins est très conductrice (Al, Au) sont déposées sur la membrane isolante (22), et sont destinées à former d'une part l'antenne, et d'autre part les électrodes de polarisation du thermomètre et la résistance de charge de l'antenne (en métal résistif : TiN, TaN...). Le tout est gravé à travers un masque de résine (voir Figure 6b).

Ensuite, une ou plusieurs couches métalliques (25), destinées à constituer la base des contacts électriques entre le thermomètre et les lignes d'interconnexion, et par exemple réalisées en titane ou en nitrure de titane TiN sont déposées puis gravées (figure 6c).

Une première couche conductrice (25) est gravée pour former l'antenne. De la même manière, une telle couche conductrice (25) est gravée afin de constituer les électrodes de contact (voir Figure 6d).

Le matériau thermorésistif (6), réalisé en silicium amorphe ou en oxyde de vanadium par exemple, est déposé puis gravé à travers un masque de résine qui protège la zone thermométrique.

Le substrat est ensuite gravé par une attaque chimique assistée par plasma de type BOSH (voir Figure 6e).

La dernière étape consiste à libérer des structures par gravure de la couche sacrificielle.

Le capot, peut être quant à lui gravé par voie chimique humide. Avant de le déposer ou de le coller sous vide en face avant (à l'instar de la réalisation décrite en relation avec la figure 4, une couche conductrice (Al, Au) épaisse d'environ 1 $\mu$m, précédée d'une couche d'accrochage (par exemple en Titane) est déposée par pulvérisation cathodique.

**Revendications**

1.  Détecteur bolométrique d'un rayonnement électromagnétique comprenant :

    - une antenne réceptrice (1, 1', 11') destinée à collecter le rayonnement électromagnétique et à ainsi assurer le couplage électromagnétique ;
    - une charge résistive (3) apte à convertir la puissance électromagnétique collectée en puissance calorifique ;
    - un élément thermométrique (4) relié à l'antenne réceptrice via la charge résistive et isolé thermiquement d'un substrat - support (2) susceptible de recevoir un circuit électronique intégrant des moyens d'excitation électrique et de prétraitement des signaux électriques générés par ledit détecteur ;

    dans lequel :

    l'antenne réceptrice est elle-même isolée thermiquement du substrat - support (2), l'ensemble constitué par l'antenne réceptrice (1, 1', 1 1'), la charge résistive (3) et l'élément thermométrique (4) est suspendu au dessus du substrat - support par le biais de bras d'isolation (6, 13, 14) thermiquement isolants, reposant eux-mêmes sur des points d'ancrage (7, 12) ménagés sur ledit substrat - support, partie (6, 13) au moins desdits bras d'isolation (6, 13) étant reliée au niveau du bord libre des faces principales de l'antenne réceptrice.

2.  Détecteur bolométrique d'un rayonnement électromagnétique selon la revendication 1, dans lequel l'antenne réceptrice (11') est également reliée aux bras d'isolation (14) au voisinage de l'élément thermométrique (4).

3.  Détecteur bolométrique d'un rayonnement électromagnétique selon l'une des revendications 1 et 2, dans lequel les bras d'isolation (6, 14) sont conducteurs électriquement.

4.  Détecteur bolométrique d'un rayonnement électromagnétique selon l'une des revendications 1 à 3, dans lequel l'antenne réceptrice est du type dipôle ou du type double dipôles.

5.  Détecteur bolométrique d'un rayonnement électromagnétique selon l'une des revendications 1 à 4, dans lequel l'élément thermométrique (4) est réalisé en matériau bolométrique choisi dans le groupe comprenant le silicium polycristallin ou amorphe de type p ou n, les oxydes de vanadium $V_2O_5$ ou $VO_2$ et les cuprates YBaCuO élaborés en une phase semi-conductrice.

6.  Détecteur bolométrique d'un rayonnement électromagnétique selon l'une l'une quelconque des revendications 1 à 5 opérant dans le domaine de fréquences comprises entre 100 GHz et 10 THz.

7.  Dispositif de détection d'un rayonnement électromagnétique, **caractérisé en ce qu'**il est constitué d'une matrice à une ou deux dimensions de détecteurs bolométriques élémentaires, connectés électriquement à un circuit de lecture, et répondant aux caractéristiques des revendications 1 à 6

8. Dispositif de détection d'un rayonnement électromagnétique selon la revendication 7 opérant dans le domaine de fréquences comprises entre 100 GHz et 10 THz.

**Claims**

1. A bolometric detector for electromagnetic radiation comprising:

   - a receiving antenna (1, 1', 11') intended to collect electromagnetic radiation and thus ensuring electromagnetic coupling;
   - a resistive load (3) capable of converting the electromagnetic power collected into heating capacity;
   - a thermometric element (4) connected to the receiving antenna via the resistive load and thermally isolated from a support substrate (2) capable of accommodating an electronic circuit that includes means of electric excitation and means of pre-processing the electric signals generated by said detector ;

   wherein :

   - the receiving antenna is itself thermally isolated from the support substrate (2),
   - the assembly consisting of the receiving antenna (1, 1', 11'), the resistive load (3) and the thermometric element (4) is suspended above the support substrate by means of thermally insulating isolating arms (6, 13, 14) lying on anchoring points (7, 12) made on said support substrate, at least part of said isolating arms (6, 13) being connected on the free edge of the main faces of the receiving antenna.

2. A bolometric detector for electromagnetic radiation as claimed in claim 1, wherein the receiving antenna (11') is connected to the isolating arms (14) in the vicinity of the thermometer (4).

3. A bolometric detector for electromagnetic radiation as claimed in claim 1 or 2, wherein the isolating arms (6, 14) are electrically conductive.

4. A bolometric detector for electromagnetic radiation as claimed in claims 1 to 3, wherein the receiving antenna is of the dipole type or double-dipole type.

5. A bolometric detector for electromagnetic radiation as claimed in claims 1 to 4, wherein the thermometric element (4) is made of a bolometric material selected from the group comprising type p or n polycrystalline or amorphous silicon, vanadium oxides ($V_2O_5$, $VO_2$) and cuprates (YBaCuO) produced in a semiconductor phase.

6. A bolometric detector for electromagnetic radiation according to claims 1 to 5, operating at frequencies from 100 GHz to 10 THz.

7. A device for detecting electromagnetic radiation, wherein it consists of a one- or two-dimensional array of elementary bolometric detectors electrically connected to a readout circuit and having the features defined in claims 1 to 6.

8. A device for detecting electromagnetic radiation according to claim 7, wherein it operates at frequencies from 100 GHz to 10 THz.

**Patentansprüche**

1. Bolometrischer Detektor für eine elektromagnetische Strahlung, umfassend:

   - eine Empfangsatenne (1, 1', 11'), die dazu bestimmt ist, die elektromagnetische Strahlung zu sammeln und auf diese Weise die elektromagnetische Kopplung zu gewährleisten;
   - eine resistive Last (3), die in der Lage ist, die gesammelte elektromagnetische Leistung in Wärmeleistung zu überführen;
   - ein thermometrisches Element (4), das mit der Empfangsantenne über die resistive Last verbunden ist und von einem Trägersubstrat (2) thermisch isoliert ist, das in der Lage ist, eine elektronische Schaltung aufzunehmen, in die Mittel zur elektrischen Anregung und Vorbehandlung der durch den Detektor erzeugten elektrischen Signale integriert sind;

   bei dem:

   die Empfangsantenne ihrerseits vom Trägersubstrat (2) thermisch isoliert ist,
   die aus der Empfangsantenne (1, 1', 11'), der resistiven Last (3) und dem thermometrischen Element (4) bestehende Einheit oberhalb des Trägersubstrats über thermisch isolierende Isolationsarme (6, 13, 14) aufgehängt ist, die ihrerseits auf Verankerungspunkten (7, 12) aufliegen, die auf dem Trägersubstrat vorgesehen sind, wobei mindestens ein Teil (6, 13) der Isolationsarme (6, 13) auf Höhe des freien Rands der Hauptseiten der Empfangsatenne verbunden ist.

2. Bolometrischer Detektor für eine elektromagnetische Strahlung nach Anspruch 1, bei dem die Empfangsantenne (11') auch mit den Isolationsarmen (14) in Nähe des thermometrischen Elements (4) verbunden ist.

3. Bolometrischer Detektor für eine elektromagnetische Strahlung nach einem der Ansprüche 1 und 2, bei dem die Isolationsarme (6, 14) elektrische Leiter sind.

4. Bolometrischer Detektor für eine elektromagnetische Srahlung nach einem der Ansprüche 1 bis 3, bei dem die Empfangsantenne vom Typ Dipol oder Doppeldipol ist.

5. Bolometrischer Detektor für eine elektromagnetische Strahlung nach einem der Ansprüche 1 bis 4, bei dem das thermometrische Element (4) aus einem bolometrischen Werkstoff hergestellt ist, der aus der Gruppe ausgewählt ist, die polykristallines oder amorphes Silicium vom Typ p oder n, die Vanadiumoxide $V_2O_5$ oder $VO_2$ und die in einer halbleitenden Phase abgeschiedenen Cuprate YBaCuO umfasst.

6. Bolometrischer Detektor für eine elektromagnetische Strahlung nach einem der Ansprüche 1 bis 5, der im Frequenzbereich zwischen 100 GHz und 10 THz arbeitet.

7. Vorrichtung zum Erfassen einer elektromagnetischen Strahlung, **dadurch gekennzeichnet, dass** sie aus einer eindimensionalen oder zweidimensionalen Matrix von bolometrischen Einzeldetektoren besteht, die mit einem Lesekreis elektrisch verbunden sind und den Merkmalen der Ansprüche 1 bis 6 entsprechen.

8. Vorrichtung zum Erfassen einer elektromagnetischen Strahlung nach Anspruch 7, die im Frequenzbereich zwischen 100 GHz und 10 THz arbeitet.

**Fig. 1** ART ANTERIEUR

**Fig. 2**

**Fig. 3a**

**Fig. 3b**

**Fig. 4**

**Fig. 5**

**Fig. 6a**

**Fig. 6b**

**Fig. 6c**

**Fig. 6d**

**Fig. 6e**

**RÉFÉRENCES CITÉES DANS LA DESCRIPTION**

**Documents brevets cités dans la description**

- WO 0040937 A
- US 6329655 B
- FR 2855609